# EUROPEAN PATENT APPLICATION

(11) **EP 4 507 047 A2**
(43) Date of publication of application: **12.02.2025**
(21) Application number: 24186216.8
(22) Date of filing: 03.07.2024
(51) Int. Cl.: H01M 10/04, H01M 10/0587

(54) **METHOD AND SYSTEM FOR MANUFACTURING AN ELECTRODE ASSEMBLY FOR A BATTERY**

(30) Priority: 08.08.2023 KR 20230103758
(71) Applicant: LG Energy Solution, Ltd., Seoul 07335 (KR)
(72) Inventor: KANG, Kyu Taek, 34122 Daejeon (KR); KIM, Min Su, 34122 Daejeon (KR); PARK, Jong Seok, 34122 Daejeon (KR); KIM, June Hee, 34122 Daejeon (KR); SIM, Min Kyu, 34122 Daejeon (KR); KOH, Jee Yeon, 34122 Daejeon (KR)
(74) Representative: BCKIP Part mbB

(57) **Abstract**

A system and a method for manufacturing an electrode assembly for a battery are disclosed. The method includes supplying a first electrode sheet to a first cutter; cutting, by operating the first cutter, the first electrode sheet to form a first electrode cut portion having a first length; acquiring first position data reflecting positions on the first electrode sheet supplied to the first cutter, and/or generating a first cut count value each time the first length of the first electrode sheet is supplied to the first cutter; supplying a second electrode sheet to a second cutter; cutting, by operating the second cutter, the second electrode sheet to form a second electrode cut portion having a second length; acquiring second position data reflecting positions on the second electrode sheet supplied to the second cutter, and/or generating a second cut count value each time the second length of the second electrode sheet is supplied to the second cutter; manufacturing an electrode assembly by combining the first electrode cut portion and the second electrode cut portion with a separator interposed therebetween; and assigning identification information to the manufactured electrode assembly, wherein the identification information is associated with the first cut count value and/or the first position data corresponding to the first electrode cut portion, and with the second cut count value and/or the second position data corresponding to the second electrode cut portion.

## Description

### [Technical Field]

The present invention relates to a method and a system for manufacturing an electrode assembly for a battery.

### [Background Technology of the Invention]

Unlike primary batteries, secondary batteries are capable of being charged and discharged a plurality of times. Secondary batteries are widely used as an energy source for various wireless devices such as handsets, laptops, and cordless vacuum cleaners. Recently, as the manufacturing cost per unit capacity of secondary batteries has dramatically decreased due to improvements in energy density and economies of scale, and the cruising range of battery electric vehicles (BEVs) has increased to the same level as fuel vehicles, the main uses of secondary batteries are moving from mobile devices to mobility.

Secondary batteries are manufactured through an electrode process, an assembly process, and an activation process. Among them, the electrode process is the most critical process in determining the yield and performance of battery cells. The electrode process may include a coating process, a roll pressing process, and a slitting process. In the coating process, the surface of a current collector may be coated with active materials and insulating materials. In the roll pressing process, an electrode may be pressed by pressing rolls. The roll pressing process may determine the density, performance and surface quality of the electrode. In the slitting process, the electrode may be slit into a plurality of electrodes depending on the design of the battery cell.

### [Summary of the Invention]

It is one object of the present invention to provide a battery manufacturing device and a battery manufacturing method with improved quality traceability in a battery manufacturing process.

To this end, the present invention provides a method for manufacturing an electrode assembly for a battery in accordance with claim 1 and a system for manufacturing an electrode assembly for a battery in accordance with claim 12.

According to a first aspect of the invention, a method for manufacturing an electrode assembly for a battery is provided. The method may include supplying a first electrode sheet to a first cutter, cutting, by operating the first cutter, the first electrode sheet to form a first electrode cut portion having a first length, acquiring first position data reflecting positions on the first electrode sheet supplied to the first cutter, and/or generating a first cut count value each time the first length of the first electrode sheet is supplied to the first cutter. Additionally, or alternatively, the method may further include supplying a second electrode sheet to a second cutter, cutting, by operating the second cutter, the second electrode sheet to form a second electrode cut portion having a second length, acquiring second position data reflecting positions on the second electrode sheet supplied to the second cutter, and/or generating a second cut count value each time the second length of the second electrode sheet is supplied to the second cutter.

Optionally, the method may further include manufacturing an electrode assembly by combining the first electrode cut portion and/or the second electrode cut portion with a separator, preferably interposed between the first and the second electrode cut portion, and assigning identification information to the manufactured electrode assembly, wherein the identification information is associated with the first cut count value and/or the first position data corresponding to the first electrode cut portion, and with the second cut count value and/or the second position data corresponding to the second electrode cut portion.

According to some embodiments, the method may further include notching the first and/or the second electrode sheet to form electrode tabs on the first electrode sheet and/or the second electrode sheet before cutting the first and/or the second electrode sheets. Optionally, the first cutter is operated such that a respective electrode tab formed in the first electrode sheet is located completely within the first electrode cut portion. Likewise, the second cutter may be operated such that a respective electrode tab formed in the second electrode sheet is located completely within the second electrode cut portion.

According to some embodiments, the first electrode cut portion and/or the second electrode cut portion may be combined with a separator of a third length.

According to some embodiments, the identification information assigned to the electrode assembly may further be associated with one or more of the following: lot identification information of the first electrode sheet and lot identification information of the second electrode sheet; data on defects of the first electrode sheet and the second electrode sheet; data on defects of the electrode assembly; tray identification information identifying a tray on which the electrode assembly is loaded; data on a loading position of the electrode assembly in the tray; and can identification information identifying an electrode can in which the electrode assembly is accommodated.

According to some embodiments, acquiring the first position data may include acquiring first coordinate values reflecting the positions on the first electrode sheet corresponding to the first electrode cut portion.

According to some embodiments, acquiring the second position data may include acquiring second coordinate values reflecting the positions on the second electrode sheet corresponding to the second electrode cut portion.

According to some embodiments, the first coordinate values may include at least a start coordinate value corresponding to one end of the first electrode cut portion, and an end coordinate value of the first electrode cut portion corresponding to an opposite end of the first electrode cut portion.

According to some embodiments, the second coordinate values may include at least a start coordinate value corresponding to one end of the second electrode cut portion, and an end coordinate value of the second electrode cut portion corresponding to an opposite end of the second electrode cut portion.

According to some embodiments, the method may further include generating a first roll map including a visual representation of the first electrode sheet having been supplied to the first cutter and processed to form the electrode assembly, the first roll map reflecting process event data acquired from the first electrode sheet associated with the first position data.

According to some embodiments, the method may further include generating a second roll map including a visual representation of the second electrode sheet having been supplied to the second cutter and processed to form the electrode assembly, the second roll map reflecting process event data acquired from the second electrode sheet associated with the second position data.

According to some embodiments, the identification information assigned to the electrode assembly may further associated with the process event data via the first and/or the second position data.

According to some embodiments, the method further may further include acquiring the process event data, optionally as time series data, respectively while the first electrode sheet is supplied to the first cutter and while the second electrode sheet is supplied to the second cutter.

According to some embodiments, the process event data may include at least one of: equipment data acquired from process equipment physically interacting with the first and second electrode sheets; inspection and/or measurement data acquired from the first and second electrode sheets.

According to some embodiments, generating the first cut count value may include detecting a length of the first electrode sheet supplied to the first cutter, and increasing the first cut count value each time the first length of the first electrode sheet is supplied to the first cutter.

According to some embodiments, generating the second cut count value may include detecting a length of the second electrode sheet supplied to the second cutter, and increasing the second cut count value each time the second length of the second electrode sheet is supplied to the second cutter.

According to a second aspect of the invention, a system for manufacturing an electrode assembly for a battery may include a first cutter configured to cut a first electrode sheet supplied to the first cutter to form a first electrode cut portion having a first length and a first position detecting means configured to acquire first position data reflecting positions on the first electrode sheet supplied to the first cutter. Additionally, or alternatively, the system may include a second cutter configured to cut a second electrode sheet supplied to the second cutter to form a second electrode cut portion having a second length and a second position detecting means configured to acquire second position data reflecting positions on the second electrode sheet supplied to the second cutter.

Optionally, the system may include a combinator configured to manufacture an electrode assembly by combining the first electrode cut portion and/or the second electrode cut portion with a separator, preferably such that the separator is interposed between the first and second electrode cut portions.

Further, optionally, the system may include an electronic control system in signal communication with the first cutter and/or the second cutter, the first position detecting means and/or the second position detecting means.

The electronic control system may be configured to, in accordance with the method according to the first aspect of the invention, operate the first and/or the second cutter, generate the first and/or the second cut count value, and assign the identification information to the manufactured electrode assembly.

The electronic control system may be configured to associate the identification information with the first cut count value and/or the first position data, and/or with the second cut count value and/or the second position data.

According to some embodiments, the combinator may be a winder configured to wind the first electrode cut portion and/or the second electrode cut portion with the separator therebetween to manufacture the electrode assembly.

According to some embodiments, the system may further comprise a first electrode roll configured to unwind the first electrode sheet for supplying it to the first cutter.

According to some embodiments, the system may further comprise a second electrode roll configured to unwind the second electrode sheet for supplying it to the second cutter.

According to some embodiments, the first position detecting means may include a first position measurement device configured to generate a first position signal of the first electrode sheet supplied to the first cutter, and a first control unit forming part of the electronic control system and being configured to acquire, based on the first position signals, the first position data.

According to some embodiments, the second position detecting means may include a second position measurement device configured to generate a second position signal of the second electrode sheet supplied to the second cutter, and a second control unit forming part of the electronic control system and being configured to acquire, based on the second position signals, the second position data.

According to some embodiments, the first and the second control unit may be integrated in one single controller, preferably in a process programmable logic controller.

According to some embodiments, the first position measurement device may be configured to detect a length of the first electrode sheet supplied to the first cutter, and the electronic control system may comprise a first cut counter configured to increase a first cut count value each time the first length of the first electrode sheet is supplied to and cut by the first cutter.

According to some embodiments, the second position measurement device may be configured to detect a length of the second electrode sheet supplied to the second cutter, and the electronic control system may comprise a second cut counter configured to increase a second cut count value each time the second length of the second electrode sheet is supplied to and cut by the second cutter.

According to some embodiments, the electronic control system may include a process controller configured to control supply of the electrode sheets to the first and/or the second cutter and/or to control operation of the first and/or the second cutter.

According to some embodiments, the electronic control system may include a server data-communicably connected to the process controller. Optionally, the process controller, the sever or a combination of the process controller and the server may form an identification information assigning device configured to: associate the identification information with the first cut count value and/or the first position data, and/or with the second cut count value and/or the second position data. Additionally, or alternatively, the identification information assigning device may be configured to assign the identification information to the manufactured electrode assembly.

According to some embodiments, the electronic control system may include a roll map creation server configured to generate the first roll map and/or the second roll map.

According to an exemplary embodiment, there is provided a battery manufacturing device including a first cutter configured to cut a first electrode sheet unwound from a first electrode roll by a first winding length, a second cutter configured to cut a second electrode sheet unwound from a second electrode roll by a second winding length, a winder configured to manufacture an electrode assembly by winding the first electrode sheet of the first winding length and the second electrode sheet of the second winding length with a separator interposed therebetween, and an identification information assigning device configured to assign identification information to the electrode assembly based on at least one of i) and ii) below,
i) a cut count value of the first electrode sheet and a cut count value of the second electrode sheet, and
ii) a position coordinate value of the first electrode sheet corresponding to the first winding length and a position coordinate value of the second electrode sheet corresponding to the second winding length.

According to the exemplary embodiment, the battery manufacturing device may further include a first notching device configured to notch the first electrode sheet unwound from the first electrode roll and a second notching device configured to notch the second electrode sheet unwound from the second electrode roll.

According to the exemplary embodiment, the battery manufacturing device may further include a position measurement device configured to generate a position signal of the first electrode sheet moving from the first electrode roll to the winder and a position signal of the second electrode sheet moving from the second electrode roll to the winder, and coordinate data including the position coordinate values may be acquired based on the position signals.

According to the exemplary embodiment, the battery manufacturing device may include at least one first electrode inspection and/or measurement device between the first electrode roll and the winder and at least one second electrode inspection and/or measurement device between the second electrode roll and the winder.

The identification information assigning device may be a process controller configured to control each process equipment from the first and second electrode rolls to the winder, an identification information management server data-communicably connected to the process controller, or a combination of the process controller and the identification information management server.

The process controller and/or the identification information management server may manage the identification information about the electrode assembly with process event data acquired when the first electrode sheet moves from the first electrode roll to the winder and when the second electrode sheet moves from the second electrode roll to the winder.

According to the exemplary embodiment, the battery manufacturing device may further include a roll map creation server configured to create each of a first electrode roll map that is a simulated electrode in which a first coordinate value indicating a position of the first electrode sheet moving from the first electrode roll to the winder and the process event data acquired according to the movement of the first electrode sheet are represented in relation and a second electrode roll map that is a simulated electrode in which a second coordinate value indicating a position of the second electrode sheet moving from the second electrode roll to the winder and the process event data acquired according to the movement of the second electrode sheet are represented in relation.

The identification information assigning device may be data-communicably connected to the roll map creation server, and the identification information assigning device or the roll map creation server may relate the identification information about the electrode assembly to at least one of the first and second coordinate values and the process event data included in the first and second electrode roll maps.

According to an exemplary embodiment, there is provided a battery manufacturing device including a first cutter configured to cut a first electrode sheet unwound from a first electrode roll by a first winding length, a second cutter configured to cut a second electrode sheet unwound from a second electrode roll by a second winding length, a winder configured to manufacture an electrode assembly by winding the first electrode sheet of the first winding length and the second electrode sheet of the second winding length with a separator interposed therebetween, and a roll map creation server configured to create each of a first electrode roll map that is a simulated electrode in which a first coordinate value indicating the position of the first electrode sheet moving from the first electrode roll to the winder and process event data acquired according to the movement of the first electrode sheet are represented in relation and a second electrode roll map that is a simulated electrode in which a second coordinate value indicating the position of the second electrode sheet moving from the second electrode roll to the winder and process event data acquired according to the movement of the second electrode sheet are represented in relation.

According to the exemplary embodiment, the battery manufacturing device may further include a first notching device configured to notch the first electrode sheet unwound from the first electrode roll and a second notching device configured to notch the second electrode sheet unwound from the second electrode roll.

According to the exemplary embodiment, the battery manufacturing device may include an identification information assigning device configured to assign identification information to the electrode assembly based on at least one of i) and ii) below,
i) a cut count value of the first electrode sheet and a cut count value of the second electrode sheet, and
ii) a first coordinate value of the first electrode sheet corresponding to the first winding length and a second coordinate value of the second electrode sheet corresponding to the second winding length.

The identification information assigning device may be data-communicably connected to the roll map creation server, and the identification information assigning device or the roll map creation server may relate the identification information about the electrode assembly to at least one of the first and second coordinate values and the process event data included in the first and second electrode roll maps.

According to another exemplary embodiment, there is provided a battery manufacturing method including cutting a first electrode sheet unwound from a first electrode roll by a first winding length, and cutting a second electrode sheet unwound from a second electrode roll by a second winding length, manufacturing an electrode assembly by winding the first electrode sheet of the first winding length and the second electrode sheet of the second winding length with a separator interposed therebetween, and assigning identification information to the electrode assembly based on at least one of i) and ii) below,
i) a cut count value of the first electrode sheet and a cut count value of the second electrode sheet, and
ii) a position coordinate value of the first electrode sheet corresponding to the first winding length and a position coordinate value of the second electrode sheet corresponding to the second winding length.

The battery manufacturing method may further include, prior to the cutting of the first electrode sheet and the second electrode sheet, performing notching processing to form electrode tabs on the first electrode sheet and the second electrode sheet, respectively, a notching processing portion of the first electrode sheet may be included within the first winding length, and a notching processing portion of the second electrode sheet may be included within the second winding length.

The first electrode sheet of the first winding length and the second electrode sheet of the second winding length may be manufactured into the electrode assembly by being wound together with a separator of the third winding length.

The identification information about the electrode assembly may be related to one or more of the following,
1) lot identification information about the first electrode sheet and lot identification information about the second electrode sheet,
2) a cut count value of the first electrode sheet and a cut count value of the second electrode sheet,
3) a position coordinate value of the first electrode sheet corresponding to the first winding length and a position coordinate value of the second electrode sheet corresponding to the second winding length,
4) data on defects of the first electrode sheet and the second electrode sheet,
5) data on defects of the electrode assembly,
6) tray identification information about a tray on which the electrode assembly is loaded,
7) data on a loading position of the electrode assembly in the tray, and
8) can identification information about an electrode can in which the electrode assembly is accommodated.

The position coordinate value of the first electrode sheet may include at least one of a start coordinate value and an end coordinate value of the first winding length, and the position coordinate value of the second electrode sheet may include at least one of a start coordinate value and an end coordinate value of the second winding length.

The position coordinate values of the first electrode sheet and the second electrode sheet may be roll map coordinate values included in a first electrode roll map that is a simulated electrode imitating the first electrode sheet moving from the first electrode roll to a winder and a second electrode roll map that is a simulated electrode imitating the second electrode sheet moving from the second electrode roll to the winder.

The identification information about the electrode assembly may be further related to process event data acquired when the first electrode sheet moves from the first electrode roll to a winder and when the second electrode sheet moves from the second electrode roll to the winder.

The process event data may include at least one of equipment data acquired from each process equipment from the first and second electrode rolls to the winder, process-related inspection and/or measurement data acquired in each process, and time series data acquired in each process.

According to the present invention, identification information (ID) can be assigned to an electrode assembly manufactured in a winding process. Thereby, it is possible to prevent occurrence of a gray zone in which the electrode assembly cannot be traced between the winding process and a following process of the winding process.

In addition, according to the present invention, position data, such as coordinate values indicating the position of an electrode to be wound in the winding process, can be acquired and the position data can be related to the identification information. Thereby, it is possible to easily trace the quality of electrodes processed in the winding process and an electrode process before the winding process.

In addition, according to the present invention, identification information on an electrode assembly included in, for example, a cylindrical battery or a prismatic battery can be acquired, and the identification information can be matched to identification information about a workpiece (e.g., electrode), an intermediate product, or a product before and after the winding process. Thereby, it is possible to easily perform quality control and quality tracing throughout the entire battery manufacturing process.

The effects that can be obtained from exemplary embodiments of the present invention are not limited to the effects mentioned above, and other effects not mentioned can be clearly derived and understood by those skilled in the art to which exemplary embodiments of the present disclosure pertain from the following description. That is, unintended effects resulting from implementing exemplary embodiments of the present disclosure can also be derived by those skilled in the art from the exemplary embodiments of the present disclosure.

The features and advantages disclosed herein in combination with one aspect of the invention are also disclosed for the other aspect(s) of the invention and vice versa.

### [Brief Description of the Drawings]

FIG. 1 shows a battery manufacturing system according to an exemplary embodiment of the present invention.
FIG. 2 shows a system for manufacturing an electrode assembly for a battery according to an exemplary embodiment of the present invention.
FIG. 3 is a schematic diagram showing that an electrode and a separator are wound by a winder at a predetermined length.
FIG. 4 shows that identification information about an electrode assembly is related to other information according to the exemplary embodiment.
FIG. 5 shows a system for manufacturing an electrode assembly for a battery according to a further exemplary embodiment of the present invention.
FIG. 6 is a flowchart for describing a method for manufacturing an electrode assembly for a battery according to an exemplary embodiment of the present invention.

### [Detailed Description of Exemplary Embodiments]

Hereinafter, preferred embodiments of the present invention will be described in detail with reference to the accompanying drawings. Prior to the description, terms or words used in this specification and claims should not be restrictively interpreted as ordinary meanings or dictionary-based meanings, but should be interpreted as meanings and concepts conforming to the technical aspects of the present invention on the basis of the principle that an inventor is allowed to properly define concepts of terms to describe his or her invention in the best ways.

Therefore, embodiments described in the specification and configurations shown in the drawings are merely the most preferred embodiment of the present invention, and, not intended to fully describe the technical aspects of the present invention, so it should be understood that a variety of other equivalents and modifications could be made thereto at the time of filing the application.

Furthermore, in describing the present invention, when it is determined that the detailed description of the related known technology or function may obscure the subject matter of the present invention, the detailed description thereof will be omitted.

Since embodiments of the present invention are provided to more completely describe the present invention to those skilled in the art, the shapes, sizes, or the like of components in the drawings may be exaggerated, omitted, or schematically shown for clearer description. Therefore, the size or ratio of each component does not entirely reflect the actual size or ratio.

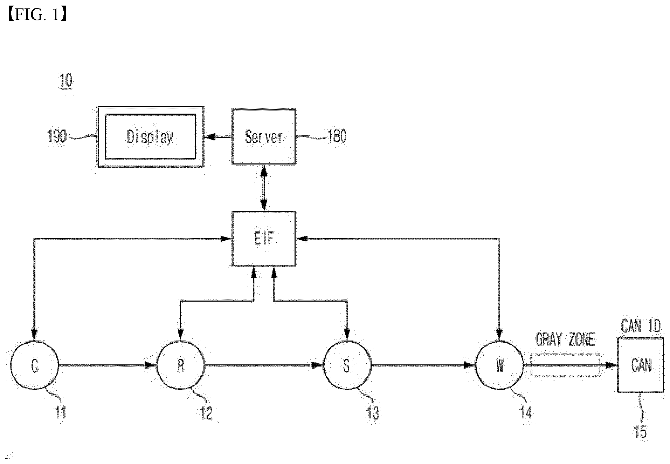

FIG. 1 shows a battery manufacturing system 10.

Referring to FIG. 1, a battery manufacturing system 10 may include a coating device 11, a roll pressing device 12, a slitting device 13, a winding device 14, an intermediate server (EIF), a server 180, and a display device 190.

The battery manufacturing system 10 may be configured to manufacture a battery cell (e.g., a cylindrical battery cell or a prismatic battery cell) by performing a series of roll-to-roll processes. The electrode sheet unwound from the input electrode roll may be processed by any one of a die coater of the coating device 11, pressing rolls of the roll pressing device 12, and a slitting knife of the slitting device 13, and the processed electrode sheet may be wound into an electrode roll. Accordingly, the processes of the coating device 11, the roll pressing device 12, and the slitting device 13 for the production of battery electrodes may be referred to as the roll-to-roll processes. The winding device 14 may wind a first electrode sheet (e.g., a negative electrode sheet) unwound from a first electrode roll (e.g., a negative electrode roll), a second electrode sheet (e.g., a positive electrode sheet) unwound from a second electrode roll (e.g., a positive electrode roll), and separator sheets unwound from separator rolls together. Accordingly, the process performed by the winding device 14 may also be referred to as the roll-to-roll process.

The coating device 11 may perform the coating process on the electrode sheet. The coating process may coat an electrode slurry on the electrode sheet. The electrode slurry may include an active material, a conductive material, a binder, and a solvent. An electrode slurry may be provided by dissolving the active material, the conductive material, the binder, or the like, in the solvent.

The roll processing device 12 may perform the roll pressing process on the electrode sheet. In the roll pressing process, the electrode sheet coated with the electrode slurry may be passed between pressing rolls. The roll pressing process may flatten the surface of the electrode sheet and enhance the bonding strength between the active material of the electrode sheet and the current collector.

The slitting device 13 may perform the slitting process on the electrode sheet. The electrode sheet may be separated into a plurality of electrode sheets by the slitting process.

The winding device 14 may wind the positive electrode sheet, the negative electrode sheet, and the separator interposed therebetween and cut them after reaching a winding target length, thereby providing an electrode assembly of a cylindrical battery cell (e.g., a jelly roll-type electrode assembly).

The intermediate server (EIF) may be a device for communication between process controllers of a manufacturing facility and the server 180. A process controller of the coating device 11, a process controller of the roll pressing device 12, a process controller of the slitting device 13, and a process controller of the winding device 14 may communicate with the server 180 through the intermediate server (EIF). Of course, as needed, each process controller may communicate directly with the server 180. Accordingly, data for process events occurring in the coating device 11, the roll pressing device 12, the slitting device 13, and the winding device 14 may be transmitted to the server 180.

The server 180 may be configured to generate a roll map containing the process event data. Data of the roll map may include data representing process events and coordinate values matched to the data. The coordinate values may represent positions on electrodes. Accordingly, the roll map enables feedback, feed forward, and battery manufacturing process tracing, which will be described below. The server 180 may transmit a visualization command (VC) to the display device 190, and the display device 190 may visualize the roll map and display the visualized roll map.

The roll map may be generated on a lot basis. A lot is a production unit in the roll-to-roll process, and an electrode roll that is separated after achieving the target winding length for each process is an example of the lot. Likewise, an electrode roll loaded on an unwinder of each process are also an example of the lot. The server 180 may generate and store a roll map of each process (e.g., the coating process, the roll pressing process, or the slitting process).

In the roll map, time series data constructed over time (that is, according to the progress of the process) may be related to coordinate data collected based on the amount or length of movement of the electrode sheet, that is, one of a consumption amount or input amount.

Battery manufacturing involves a series of different processes, and a leading or preceding process affects a following or subsequent process carried out after the preceding process. In this case, when the time series data from the leading process does not directly match a workpiece, an intermediate product, and a product in the real world, it is difficult to reflect the time series data from the leading process on the following process. Hereinafter, correction of the following process based on data generated according to results of the leading process is referred to as feed forward.

Here, the workpiece refers to an article provided as a result of each process, such as an electrode sheet on which the coating process, the roll pressing process, and the slitting process have been performed. The intermediate product may refer to one of separators, electrodes, and assemblies thereof cut through a notching process. The intermediate product may be a structure including a housing and an electrode assembly built into the housing (in some cases, the structure further includes an electrolyte). The product refers to an article that has been processed to operate as a battery through an activation process. The above-mentioned definitions of the workpiece, intermediate product, and product refer to one aspect thereof and do not exclude the usual definitions thereof.

Because process events generally occur as the process progresses, the process event data related to process events may include time series data. For example, a process controller for each process may control the overall flow of each process. Therefore, it is possible to acquire events that occur according to a time flow of the process or a point in time of data occurrence. That is, process event data may include a value representing an event and a time value matched thereto. Accordingly, the process event data may include time series data acquired in each process.

In addition, the process event data may include equipment data acquired from each process equipment. The equipment data may be acquired from each process controller for controlling each process. The process controller may be a control device used for maintenance, management, automatic control, and monitoring of a process system in each process such as each sub process (e.g., the coating process, the roll pressing process, and slitting process), an assembly process of an electrode process (e.g., an electrode stacking process or winding process), an activation process, and a module/pack process. For example, a process programmable logic controller (PLC) may be used as the process controller.

The process controller may control equipment related to each process, such as driving of a motor required to move electrodes, motor rotation speed, and the like. Additionally, or alternatively, the process controller may control process parameters required for each process. As exemplary process parameters, electrode drying temperature and/or electrode temperature may be controlled in the coating process, and roll pressing pressure and the like may be adjusted in the roll pressing process. Therefore, equipment data may include various process parameter data controlled by the process controller in each process.

The process event data may include process-related inspection and/or measurement data acquired in each process. For example, in the coating process, an electrode slurry loading amount may be measured or a reference point marked on the electrode may be measured or detected. In the roll pressing process, the thickness of the electrode after roll pressing may be measured. In addition, an appearance inspection machine (e.g., a vision inspection machine) may be commonly employed in the coating process, roll pressing process, and slitting process. Inspection and/or measurement data includes all data inspected or measured by a specified inspection device, measurement device, or inspection and measurement device in each process. In other words, the inspection and/or measurement data may include work results and/or test results performed in each process.

The process event data is generated according to the progress of various processes performed on the electrode, and the process event data may be acquired for each individual process.

For feed forward, time series data needs to be related to positions of workpieces, parts, intermediate products, and products in the real world. Here, the feed forward may include controlling processing of the electrode sheet based on the roll map generated in the leading process. The roll map is a type of simulated electrode obtained by imitating a moving real electrode (for example, a real electrode moving between the unwinder and a rewinder). In other words, the roll map may be a visual representation of the electrode in which process event data is shown at a specific position corresponding a position of the real electrode where it has been acquired. The roll map may relate time series data to coordinate data containing coordinate values representing positions on the workpieces, parts, intermediate products, and products in the real world. The roll map may provide matching of time series data with the workpieces, parts, intermediate products, and products in the real world based on the coordinate data. Accordingly, creation of the roll map and feed forward based on the roll map may enhance productivity and quality by quantifying and objectifying aspects of processes that depend on an operator's discretion.

In addition, a roll map of a leading lot may be used to improve a process for a following lot, and this operation may be referred to as process feedback. The process feedback using the roll map may include identifying a process condition and a process parameter that cause a problem and a defect based on data included in the roll map.

Furthermore, the roll map is cumulatively created for workpieces, parts, intermediate products and products of unit processes, thereby making it possible to trace a process history for shipped products (e.g., battery cells, battery modules or battery packs). As one example, a battery cell may include identification information (ID) assigned to an electrode assembly or case. The ID may include a lot number and coordinate information of electrodes and separators included in the battery cell. In other words, the ID may be related to the roll map of electrodes and separators included in the battery cell. Accordingly, when an event such as a quality issue occurs in a battery cell that has already been shipped, historical data on the manufacturing of the battery cell may be retrieved based on the ID.

According to exemplary embodiments, the server 180 may be a data processing system that supports various activities necessary to manage battery manufacturing, such as work schedule management, work instructions, quality control, and work performance tally. The server 180 may be, for example, a manufacturing execution system (MES). The server 180 may be configured to perform input, processing, output, and communication of data required for electrode manufacturing, such as the coating process, the press process, and manufacturing process.

According to other exemplary embodiments, the server 180 may be configured to store and process raw measurement data. The server 180 may manage or monitor the quality of processing of the electrode sheet by continuously monitoring the processing of the electrode sheet based on the measurement data. According to exemplary embodiments, the server 180 may be a statistical process controller (SPC). By collecting and analyzing manufacturing data in almost real time, the server 180 may identify problem conditions in a timely manner and provide alerts to the operator before potential problems occur.

According to other exemplary embodiments, the server 180 may be, for example, a data warehouse and may store the roll map for a long period of time based on the quality assurance period of the product or the like.

According to other exemplary embodiments, the server 180 may perform all functions of MES, SPC, and data warehouse, or may be provided separately from MES, SPC, and data warehouse to create the roll map.

Referring again to FIG. 1, the electrode assembly manufactured by being wound in the winding device 14 may be transferred and accommodated in a case such as a can. A can ID, which is separate can identification information, may be assigned to the can, and the can ID is a type of battery cell ID. Accordingly, the historical data on the manufacturing of the battery cell may be retrieved based on the can ID.

However, before the electrode assembly is accommodated in the can, in terms of logistics flow, a plurality of electrode assemblies may be accommodated and stored in a tray, or the tray may be transported and transferred to the can. When a plurality of electrode assemblies are mixed up during this process, it is difficult to identify what material (electrode, separator, or the like) the electrode assembly accommodated in the can is made of even when the can ID is assigned during the can manufacturing process. That is, a gray zone where the electrode assembly may not be traced occurs between the winding process and the can manufacturing process. Accordingly, even when process event data or coordinate data related to the electrode of each sub-process is secured by generating the roll map in each sub-process before the winding process, in various processes between each sub-process and the can manufacturing process, it is not possible to trace the corresponding data in relation to the electrodes or the like provided in the electrode assembly.

It is one idea of the present invention, in order to prevent the gray zone from occurring, to assign identification information (ID) to the electrode assembly manufactured in the winding process. The identification information may be assigned based on cut count values and/or position data, such as coordinate values, of electrodes included in the electrode assembly.

According to another idea of the present invention, a roll map that imitates the movement of the electrode moved in the winding process may be generated.

The winding process may refer to a process in which electrodes and separators are wound in a winder. Generally, the winding process may include all processes in which electrode sheets and separator sheets unwound from electrode rolls and separator rolls are processed and cut and wound in the winder. That is, the unwinding process, (notching) processing process, inspection and/or measurement process, cutting process, and winding process in the winder are all included in the winding process in the broad sense. The roll map may be created to imitate the electrode moving during the winding process in the broad sense. The winding process is not limited to a process in which the electrode sheets and separator sheets are unwound from electrode rolls and combined in a winder. Rather, the electrode sheets and the separator, generally, are supplied to a combinator configured to combine the electrode sheets with a separator therebetween.

The roll map of the winding process includes position data including the coordinate value of each electrode moving during the winding process, and process event data. The identification information about the electrode assembly may be related to position data and process event data. The position data and process event data about each electrode input into the winding process may be compared with roll map data (position data and process event data) in each process generated in each sub-process before the winding process. That is, since position data, such as coordinate values, is assigned to the electrodes in various sub-processes, which are leading processes, and electrodes in the winding process, which is a following process, respectively, changes in the quality of or historical data related to the manufacture of electrodes that have gone through leading and following processes may be retrieved by comparing the corresponding position data.

Furthermore, the identification information about the electrode assembly may be related to pieces of data acquired in a following process after the winding process (e.g., data related to a tray on which the electrode assembly is loaded, can ID, or the like). Therefore, since pieces of data related to each electrode assembly may be retrieved between the winding process and a following process based on the identification information, the quality may be easily traced between the winding process and the following process.

In conclusion, through the identification information about the electrode assembly, all historical data related to the quality or manufacture of the electrode may be traced throughout the winding process and all leading and following processes. Accordingly, process management and quality control may be efficiently carried out throughout the entire battery manufacturing process, and more reliable battery manufacturing is possible.

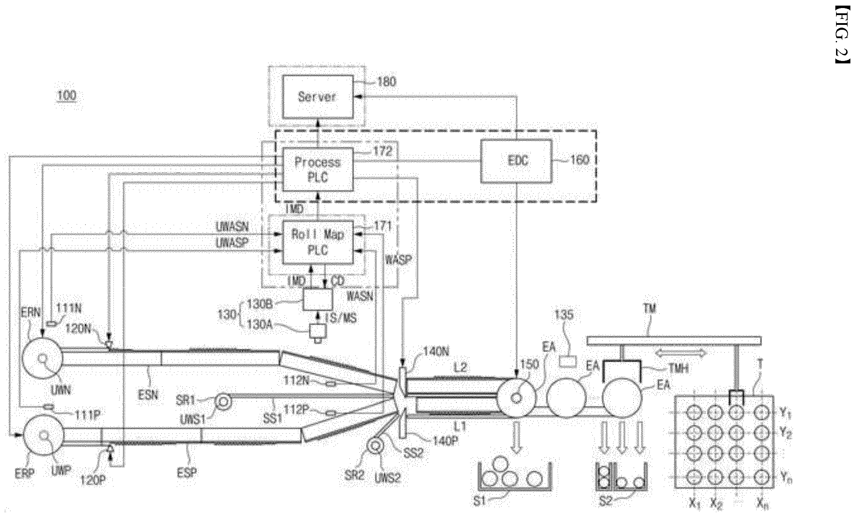

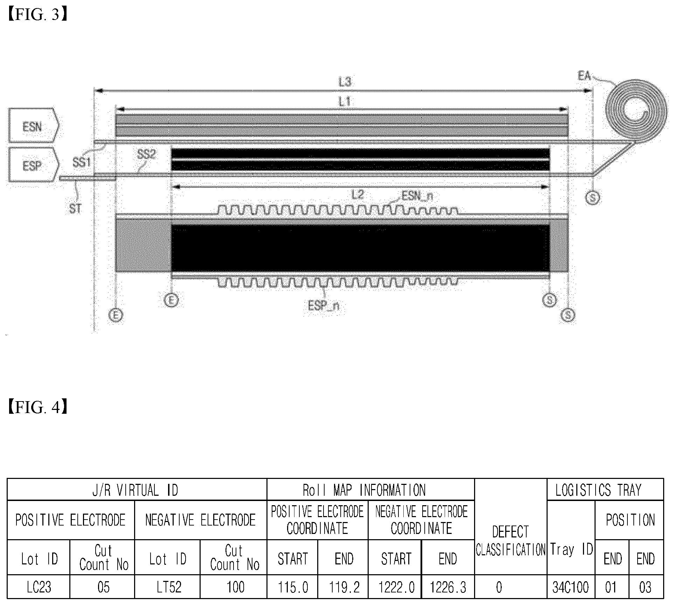

FIG. 2 exemplarily shows a system for manufacturing an electrode assembly for a battery. FIG. 3 is a schematic diagram showing that an electrode and a separator are combined or wound by a winder at a predetermined length, wherein FIG. 3, in the upper part, shows a side view of the combined electrode and separators and, in the lower part, shows a top view of the combined electrode and separators. FIG. 4 shows an example in which identification information about an electrode assembly is related to other information.

Referring to FIG. 2, a system manufacturing an electrode assembly for a battery 100 may include unwinders UWN, UWP, UWS1, and UWS2, position measurement devices 111N, 111P, 112N, and 112P, a first notching device 120N, a second notching device 120P, at least one inspection and/or measurement device 130, a first cutter 140N, a second cutter 140P, a combinator, for example, in the form of a winder 150, and an electronic control system. The electronic control system may include one or more of an identification information management server 160, a roll map programmable logic controller (PLC) 171, a process controller 172, and a server 180.

A first electrode roll ERN may be loaded on the unwinder UWN. The unwinder UWN may be configured to unwind a first electrode sheet ESN, which may be, for example, a negative electrode sheet, from the first electrode roll ERN.

A second electrode roll ERP may be loaded on the unwinder UWP. The unwinder UWP may be configured to unwind a second electrode sheet ESP, which may be, for example, a positive electrode sheet, from the second electrode roll ERP.

A separator roll SR1 may be loaded on the unwinder UWS1, and a separator roll SR2 may be loaded on the unwinder UWS2. The unwinders UWS1 and UWS2 may be configured to unwind separator sheets SS1 and SS2, respectively.

The first electrode sheet ESN, the second electrode sheet ESP, and the two separator sheets SS 1 and SS2 may be guided to a guide roll G that is not illustrated in FIG. 2 and moved toward the cutters 140N and 140P and the winder 150.

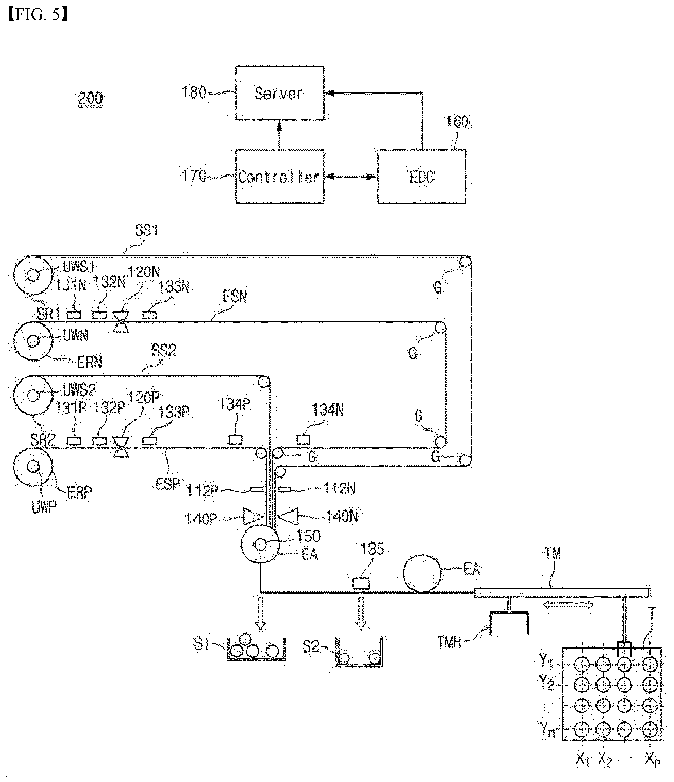

In FIG. 2, for convenience of illustration, the guide roll G is not illustrated, and a movement path of each sheet is also briefly illustrated. However, a more realistic movement path of each sheet may be configured as exemplarily shown FIG. 5.

A plurality of guide rolls G may be provided to correspond to the movement path of each sheet. The sheets guided by the respective guide rolls G may join at a point in front of the cutters 140N and 140P.

A first position measurement device 111N may be configured to detect an amount or length of the first electrode sheet ESN unwound from the first electrode roll ERN by the unwinder UWN. Accordingly, the first position measurement device 111N may be configured to generate an input amount signal UWASN indicating a length of the first electrode sheet ESN unwound by the unwinder UWN. The first position measurement device 111N may be configured to transmit the input amount signal UWASN to the roll map PLC 171.

A second position measurement device 112N may be installed near the guide roll where each sheet joins, for example, in the region of the cutters 140P, 140N. The second position measurement device 112N may be configured to detect the amount of the first electrode sheet ESN moved to the winder 150. Accordingly, the second position measurement device 112N may be configured to generate a consumption amount signal WASN indicating the length of the first electrode sheet ESN that is cut by the cutter 140N and wound in the winder 150. The second position measurement device 112N may be configured to transmit the consumption amount signal WASN to the roll map PLC 171.

A first position measurement device 111P may be configured to detect the amount or length of the second electrode sheet ESP unwound from the second electrode roll ERP by the unwinder UWP. Accordingly, the first position measurement device 111P may be configured to generate an input amount signal UWASP indicating a length of the second electrode sheet ESP unwound by the unwinder UWP. The first position measurement device 111P may be configured to transmit the input amount signal UWASP to the roll map PLC 171.

A second position measurement device 112P may be installed near the guide roll where each sheet joins, for example, in the region of the cutters 140P, 140N. The second position measurement device 112P may be configured to detect the amount of the second electrode sheet ESP moved to the winder 150. Accordingly, the second position measurement device 112P may be configured to generate a consumption amount signal WASP indicating the length of the second electrode sheet ESP that is cut by the cutter 140P and wound in the winder 150. The second position measurement device 112P may be configured to transmit the consumption amount signal WASP to the roll map PLC 171.

For example, the first and second position measurement devices may be rotary encoders configured to output a position signal as an encoder value, the position signal representing a position of the electrode moving according to the rotation amount of the unwinder, guide roll, or winder. Alternatively, the first and second position measurement devices may be linear encoders configured to output a position signal as an encoder value, the position signal representing a position of the electrode according to a moving displacement of the electrode. The encoders may be configured as a contact or non-contact type with respect to the electrode.

Generally, the roll map PLC 171 and at least one of the first position measurement devices 11 1N, 111P may form a first position detecting means configured to acquire the first position data, and the roll map PLC 171 and at least one of the second position measurement devices 121N, 121P may form a first position detecting means configured to acquire the second position data. Instead of the PLC 171 one or more different control units of the electronic control system may form part of the respective position detecting means, wherein said control unit is configured to acquire, based on the respective first or second position signals generated by the first or second position measurement devices, the first or second position data.

The system 100, optionally, may include an additional position measurement device configured to output a position signal representing a position of each separator sheet SS1 or SS2.

Each of the first electrode roll ERN and the second electrode roll ERP may be one of electrode rolls transferred to the system 100 after being processed in each leading sub-process, e.g., the coating process, the roll pressing process, or the slitting process. The electrode rolls may include defect tags, for example, NG tags, attached in a leading sub-process, e.g., the roll pressing process or the slitting process. Instead of the defect tags, marking of defect portions may be performed directly on the electrode. Accordingly, the electrode rolls may include a defect marking portion marked on the electrode in a leading sub-process. In addition, the electrode rolls may include reference points marked at predetermined intervals on the electrode in a leading sub-process, e.g., in the coating process. In addition, the electrode rolls may include a connection portion connecting electrode portions cut by breakage or defect removal during a leading sub-process, between sub-processes, or after a sub-process. For example, a connecting tape, such as an adhesive tape, may be attached to the connection portion. By detecting the position of the reference point, the connection portion, or defect marking portion (including the defect tags) of each electrode unwound from each electrode roll by the unwinder in the winding process, a change in length of each electrode sheet in the leading sub-process may be identified. The change in length may be expressed on the roll map as a change in coordinate values. The server 180 stores roll map information for each leading sub-process. Therefore, process control in the winding process may be efficiently performed using the roll map information for each sub-process. In addition, as described below, an event occurring in the moving electrode sheet during the winding process may be detected, and when the position of the reference point, the connection portion, or the defect marking portion changes due to the event, the change may be marked on the roll map of the winding process, which includes process event information of the winding process. Furthermore, by comparing the roll map of the winding process with the roll map of one or more leading sub-process, changes in electrodes that have occurred between various processes may be identified.

The first electrode sheet ESN unwound from the first electrode roll ERS may be notched by the first notching device 120N before being wound. In addition, the second electrode sheet ESP unwound from the second electrode roll ERS may be notched by the second notching device 120P before being wound.

The notching process is one of the assembly processes and may be defined as a process of processing electrode sheets, e.g., a positive electrode sheet and a negative electrode sheet, to manufacture electrode tabs, e.g., a positive electrode tab and a negative electrode tab. In the notching process, an uncoated portion of the electrode sheet that is not coated with the electrode material is cut, and an uncoated portion that remains after being cut becomes an electrode tab.

When a jelly roll-shaped electrode assembly is manufactured by winding a plurality of electrodes and separators, the notching process and the winding process may be performed on a continuous electrode transfer path.

Referring to FIG. 3, it is shown that the first electrode sheet ESN is notched and a notched portion ESN_n is formed on an uncoated portion of the first electrode sheet. In addition, it is shown that the second electrode sheet ESP is notched and a notched portion ESP_n is formed on an uncoated portion of the second electrode sheet.

After notching, the first electrode sheet ESN is cut by a first length L1 and wound in the winder or, generally, combined with a separator in a combinator such as a winder. The notched portion ESN_n of the first electrode sheet is provided within the first length L1. That is, the first electrode sheet ESN of the first length L1 is longer than the notched portion ESN_n and has electrode sheet portions extending to both sides of the notched portion. Since, in the present example, a winder is used as the combinator, the first length L1 may also be referred to as the first winding length L1.

The notched portion ESP_n of the second electrode sheet ESP is also provided within a second length L2. That is, the second electrode sheet of the second length L2 is longer than the notched portion ESP_n and has electrode sheet portions extending to both sides of the notched portion. Since, in the present example, a winder is used as the combinator, the second length L2 may also be referred to as the second winding length L2.

The separator sheets SS1 and SS2 interposed between the first electrode sheet ESN and the second electrode sheet ESP are provided, e.g., wound and/or cut, by a third length L3. For electrical safety or insulation when wound into a jelly roll, the first to third lengths L 1, L2, L3 may be determined differently. For example, the third length L3 of the separator positioned between the first electrode sheet ESN and the second electrode sheet ESP may be made longer than the winding lengths of the other electrode sheets. Thereby, when the separator of the third length L3 is wound and becomes cylindrical, the separator may be positioned on the radial outermost side of the jelly roll electrode assembly, and, thus, helps to prevent an electrical short circuit from occurring due to direct contact between the first and second electrode sheets. In addition, for example, the first length L1 of the first electrode sheet, which is a negative electrode, may be made longer than the second winding length L2 of the second electrode sheet, which is a positive electrode.

Referring again to FIG. 2, the first and second notching devices 120N and 120P perform notching for each electrode sheet corresponding to each (winding) length L1, L2. Notching specifications such as the length of the notched portion formed within the winding length, the size of the electrode tab, and the gap between the electrode tabs may be determined or set in advance depending on the type or standard of a battery to be manufactured. In addition, the first to third (winding) lengths L1, L2, L3 may also be determined or set in advance depending on the type or standard of the battery to be manufactured. Information on notching specifications and winding length may be stored in the process controller 172 or a product production-related server (e.g., the MES) connected to the process controller 172 or, generally, in a storage device of the electronic control system. Accordingly, the process controller 172 may control notching on each electrode sheet according to set specifications by controlling the first notching device 120N and the second notching device 120P based on the above information.

Each notched electrode sheet may be inspected and/or measured by various inspection and/or measurement devices, and then cut by its winding length by the cutter.

The first electrode sheet ESN, the second electrode sheet ESP, and the separator sheets SS1 and SS2 are each guided by the corresponding guide roll and join at a point or site in front of the first cutter 140N and the second cutter 140P, that is, between the respective guide roll and the cutters 140N, 140P.

The electronic control system may control the first cutter 140N to cut the first electrode sheet ESN by the first (winding) length L1. Thereby, a first electrode cut portion having a first length L1 is formed. Similar, the electronic control system may control the second cutter 140P to cut the second electrode sheet ESP by the second (winding) length L2. Thereby, a second electrode cut portion having a second length L2 is formed. For example, the process controller 172 may control operation of the first cutter 140N and the second cutter 140P. The electronic control system, i.e., the process controller 172, may control each cutter based on information regarding the first (winding) length L1, the second (winding) length L2, and the third (winding) length L3. The electronic control system, i.e., the process controller 172 may be configured to determine a total electrode transfer length taken by the first electrode sheet ESN released from the first electrode roll ERN to the first cutter 140N, an entire electrode transfer length taken by the second electrode sheet ESP released from the second electrode roll ERP to the second cutter, and separator transfer lengths taken by the separators released from the respective separator rolls to the cutters. For example, the process controller 172 may receive the signals UWASN and UWASP regarding the amounts or lengths (input amounts) of each of electrode sheets released from the above-described position measurement devices, and/or signals WASN and WASP regarding the amounts or lengths (consumption amounts) supplied to the cutters 140N and 140P. Based on these signals, the process controller 172 may identify or determine the total transfer length of each electrode. In addition, based on information about each (winding) length L1, L2, L3, information about notching specifications, and the like, the process controller 172 may identify or determine how many electrode sheet portions corresponding to the respective (winding) length are within the entire transfer length of each electrode. Accordingly, the electronic control system, i.e., by using the process controller 172, may perform notching by a predetermined length on each electrode sheet corresponding to the winding length by controlling each notching device. Similarly, the electronic control system, i.e., by using the process controller 172 may control each cutter to cut each electrode sheet by a corresponding (winding) length.

Each cut portion of the first electrode sheet ESN of the first winding length L 1 moves to the winder 150 or, generally, the combinator, together with the separator sheet SS1. In addition, each cut portion of the second electrode sheet ESP of the second winding length L2 moves to the winder 150 or, generally, the combinator, together with the separator sheet SS2. To support the moved electrode sheet, each separator sheet may be moved to the winder 150 without being cut in advance.

The winder 150 may be configured to wind the first electrode sheet ESN, the separator sheet SS1, the second electrode sheet ESP, and the separator sheet SS2 together. Accordingly, an electrode assembly EA of a battery (e.g., a cylindrical cell) may be provided. The electrode assembly EA may include a winding structure of the first electrode sheet ESN, the separator sheet SS1, the second electrode sheet ESP, and the separator sheet SS2. The first electrode sheet ESN and the second electrode sheet ESP may be electrically isolated by the separator sheets SS1 and SS2. Accordingly, despite the winding of each sheet, a short circuit of the first electrode sheet ESN and the second electrode sheet ESP may be prevented. The separator sheet may be cut by a separator cutter (not illustrated) after winding. Although the examples described herein refer to a winder as a combinator, the present invention is not limited to a winder for combining the electrode sheets with the separator sheets, and other types of suitable combinators may be used.

In the above-described embodiment, it has been described that the first electrode sheet ESN and the second electrode sheet ESP are cut first and wound with the separator sheet.

However, after each electrode sheet and the separator are wound, it is also possible to cut a connection portion between an end of the wound electrode assembly and each electrode sheet, and a connection portion between the end and the separator. In this case, after the separator sheet SS2, the second electrode sheet ESP, the separator sheet SS1, and the first electrode sheet ESN each reach the target winding length, for separation of the electrode assembly EA, a corresponding cutter may cut the separator sheet SS2, the second electrode sheet ESP, the separator sheet SS1, and the first electrode sheet ESN.

The manufactured electrode assembly EA may be discharged from the winder 150. The discharged electrode assembly EA may be inspected by a separate inspection device 135 and then transferred to a tray T by a predetermined transfer device TM. The electrode assembly EA determined to be defective by the inspection device 135 may be discharged to a defect storage port S2 and stored therein.

The electrode assembly EA determined to be normal, i.e., to meet predefined quality criteria, may be grasped by, for example, a gripper TMH of the transfer device TM and transferred to the tray T. The tray T includes storage positions of a plurality of electrode assemblies EA. Each electrode assembly EA may be stored at a specific position within the tray T, for example, sequentially according to a transfer order or according to a separate loading algorithm. For example, when there are a plurality of rows X1, X2, ..., Xn and columns Y1, Y2, ..., Y3 in the tray T, tray loading positions of the electrode assemblies EA may be specified by ordered pairs of a matrix that is indicated by intersections of the rows and columns.

Meanwhile, when the electrode sheet ESN or ESP containing defects is wound with the separator sheet, the electrode assembly becomes a defective electrode assembly and is discarded to the defect storage port S2. In this case, even the normal electrode sheet and separator sheet that are wound with the defective electrode sheet are wasted.

Therefore, when the defective electrode sheet approaches the winder 150, the process controller 172 may generate a signal for controlling the unwinder to stop unwinding of other non-defective electrode sheets. Accordingly, only the defective electrode sheet portion may be wound in the winder 150 without winding the normal electrode sheet. The winding body of this defective electrode sheet may be discharged to a defect storage port S1. Accordingly, waste of materials such as the normal electrode, the separator, and the like may be prevented.

Defects in the electrode sheet ESN or ESP may be identified by a defect tag or defect marking attached to the actual electrode in a sub-process (e.g., the roll pressing process or slitting process) before the winding process. Alternatively, when the connecting tape connecting a broken portion is detected during the winding process, a portion of the electrode sheet provided with the connecting tape may be considered defective. Alternatively, a portion determined to be defective by inspection and/or measurement device within the winding process may be considered as a defective electrode.

The electrode rolls ERN and ERP loaded on the unwinder constitute a lot. When each electrode roll is loaded on the unwinder, identification information (e.g., lot number) about each lot may be read by a predetermined reader, e.g., by a BCR reader. Alternatively, lot identification information about a corresponding electrode roll may be input into the equipment or system through manual input by the operator. Alternatively, a code indicating the lot identification information may be included in the reference point, the defect marking, or the like, which is marked on the electrode.

Accordingly, the lot identification information about the first electrode sheet ESN and the lot identification information about the second electrode sheet ESP input into the winding process may be identified, e.g., by the electronic control system. In addition, based on the lot identification information, past manufacturing history information, such as roll map information, about the first and second electrode sheets may be identified.

Meanwhile, as described above, the completed electrode assembly EA is loaded on the tray, and identification information (e.g., tray ID) about the loaded tray T may be related to the corresponding loaded electrode assembly EA. In addition, a loading position of the corresponding electrode assembly on the tray may be identified.

However, as described above, when a plurality of electrode assemblies EA are mixed up in the process of being accommodated in the tray in terms of logistics flow, it is not possible to identify what material (electrode, separator, or the like) the electrode assembly EA accommodated in the can is made of even when a can ID is assigned during the can manufacturing process. For this reason, even though there is manufacturing history information such as roll map information for an electrode in each sub-process before the winding process, it is difficult to relate the manufacturing history information to manufacturing history information about the electrode included in the electrode assembly EA loaded on the tray T or can.

To prevent this difficulty, the system described herein is configured to assign identification information to the electrode assembly EA. To this end, the electronic control system may include or provide the function of an identification information assigning device for assigning identification information to the electrode assembly EA.

The identification information about the electrode assembly EA may be related to information that specifies the electrode included in the electrode assembly EA. In the winding process, a plurality of electrode sheet portions are notched, cut, and wound or combined. Therefore, the identification information about the electrode assembly EA may be assigned based on information that specifies the portion of the first electrode sheet of the first (winding) length L 1 and the portion of the second electrode sheet of the second (winding) length L2.

The identification information about the electrode assembly EA may be assigned based on at least one of i) and ii) below.
i) A cut count value of the first electrode sheet ESN and a cut count value of the second electrode sheet ESP, and
ii) First position data, e.g., in the form of position coordinate value(s) of the first electrode sheet ESN corresponding to the first (winding) length L1, and second position data, e.g., in the form of position coordinate value(s) of the second electrode sheet ESP corresponding to the second (winding) length L2.

The cut count value, e.g., a cutting order, of the first electrode sheet and the cut count value of the second electrode sheet, which are cut by the first cutter 140N and the second cutter 140P, respectively, may specify or identify the first electrode sheet portion and the second electrode sheet portion included in the electrode assembly EA. In other words, the individual first and second electrode cut portions included in a respective electrode assembly EA may be identified through respective cut count values.

The cut count value of the first electrode sheet cut by the first cutter 140N and the cut count value of the second electrode sheet cut by the second cutter 140P are transmitted to the process controller 172. Since the first winding length L1 and the second winding length L2 may be different, the cut count value of each electrode sheet may be different. In addition, there may be cases where only defective electrode sheets are selectively discharged and normal electrode sheets are not discharged. Accordingly, the cut count value of the first electrode sheet ESN and the cut count value of the second electrode sheet ESP do not necessarily match.

The first cutter 140N and the second cutter 140P may include, for example, a cut counter (not shown) equipped with a trigger board (not shown) to calculate the cut count value. The trigger board may generate cut count information based on each (winding) length, i.e., the first (winding) length and the second (winding) length. The trigger board may increase the count value for each winding length of the received electrode sheet. The trigger board may increase a binary coded decimal (BCD) code by one each time the count value increases. The trigger board may convert the generated cut count value of each electrode sheet into a BCD code and transmit the BCD code to the process controller. Thus, generally, a first cut count value may be generated each time the first length L 1 of the first electrode sheet is supplied to the first cutter, and a second cut count value may be generated each time the second length L2 of the second electrode sheet is supplied to the second cutter.

Based on the received cut count value of the first electrode sheet ESN and the received cut count value of the second electrode sheet ESP, the electronic control system, e.g., through the process controller 172, may assign identification information (ID) about the electrode assembly EA wound with the first and second electrode sheets having the corresponding cut count values. In this case, the ID of the electrode assembly EA may be assigned by physically marking the electrode assembly. However, the ID of the electrode assembly EA may be a virtual ID that the process controller 172 virtually assigns identification information to the corresponding electrode assembly EA based on the above-described algorithm.

Since the process controller 172 is capable of data communication with the first and second cutters, the process controller 172 may assign an ID to the electrode assembly EA based on the cut count values of the first and second electrode sheets described above. That is, the process controller 172 may be an identification information assigning device.

However, the process controller 172 is for controlling the unwinder, the notching device, the cutters, and the winder. Therefore, when an operation for assigning an ID to the electrode assembly EA or an ID issuing function is assigned to the process controller 172, an overload may be applied to the process controller 172. In this case, there is a risk that the control speed of the process controller 172 may become slow. To prevent the aforementioned limitations, a dedicated server for assigning and managing identification information may be added. Referring to FIG. 2, the identification information management server 160 data-communicably connected to the process controller 172 is provided. The identification information management server 160 may be, for example, an edge computer system (ECS) and/or an equipment data collection (EDC) server.

For example, the EDC server may receive the cut count values of the first and second electrode sheets from the process controller 172 and issue a virtual ID to the corresponding electrode assembly EA. In this case, the device for assigning identification information to the electrode assembly may be the identification information management server 160.

Alternatively, an entire combination of the process controller 172 and the identification information management server 160 (see the dotted box in FIG. 2) may also be viewed as the identification information assigning device.

When the identification information is assigned to the manufactured electrode assembly, the identification information may be associated with the first cut count value and with the second cut count value. For example, the electronic control system may store the identification information of the respective electrode assembly in association with the first and second cut count values identifying the first and second electrode cut portions included in this electrode assembly in a data storage. Since the identification information is associated with the first cut count value and with the second cut count value, the individual electrode cut portions included in the manufactured electrode assembly may be easily identified and tracked.

Additionally, or alternatively, the electronic control system, e.g., through the process controller 172 and/or the identification information management server 160, may assign identification information to the electrode assembly based on first position data of the first electrode sheet ESN corresponding to the first (winding) length L1 and second position data of the second electrode sheet ESP corresponding to the second (winding) length L2.

As described above, the system 100 of the present invention includes a position measurement device for generating a position signal of the first electrode sheet moving from the first electrode roll to the winder and a position signal of the second electrode sheet moving from the second electrode roll to the winder. Coordinate data including the position coordinate values may be acquired based on the position signals.

Specifically, based on the encoder values which are the input amount signals UWASN and UWASP of the first position measurement devices 111N and 111P, the position coordinate values of the first electrode sheet portion corresponding to the first (winding) length L1 and the second electrode sheet portion corresponding to the second (winding) length L2 may be acquired, respectively.

Alternatively, based on the encoder values which are the consumption amount signals WASN and WASP of the second position measurement devices 112N and 112P, the position coordinate values of the first electrode sheet portion corresponding to the first (winding) length L1 and the second electrode sheet portion corresponding to the second (winding) length L2 may be acquired, respectively.

The first position data of the first electrode sheet ESN may include at least one of a start coordinate value and an end coordinate value of the first winding length L 1. Likewise, the second position data of the second electrode sheet ESP may include at least one of a start coordinate value and an end coordinate value of the second winding length L2.

Accordingly, for example, in relation to, or based on, the start coordinate value and the end coordinate value of the first (winding) length L 1 of the first electrode sheet and the start coordinate value and the end coordinate value of the second (winding) length L2 of the second electrode sheet, the electronic control system, e.g., through the process controller 172 and/or the identification information management server 160, may assign identification information (ID) to a corresponding electrode assembly EA. When the identification information is assigned to the manufactured electrode assembly, the identification information may be associated with the first position data corresponding to the first electrode cut portion, and with the second position data corresponding to the second electrode cut portion.

Since the process controller 172 is connected to the above-mentioned first and second position measurement devices to control each position measurement device and allow data to communicate therebetween, the process controller 172 may acquire coordinate values corresponding to the first and second (winding) lengths L1, L2 of the first and second electrode sheets to be cut.

The encoder values (position signals) of the encoders may be considered as directly representing the position coordinate values of the above-mentioned first and second electrode sheets. Alternatively, the position signals may be converted into coordinate values of a different unit through a predetermined scale conversion. The roll map PLC 171, which will be described below, may be configured to collect coordinate data of each electrode sheet based on the position signals.

Optionally, the electrode identification information ID may be assigned to the corresponding electrode assembly EA based on both the position data and cut count values of the first electrode sheet ESN and the second electrode sheet ESP combined into the electrode assembly EA.

Once the ID of the electrode assembly EA is identified, the cut count values and position data of the electrodes included in the electrode assembly are specified. Based on the cut count values and coordinate values, the manufacturing history of each sub-process before the winding process may be traced. In addition, defect inspection, transfer, tray loading, and can storage processes of the electrode assembly are performed based on the ID of the electrode assembly EA. Accordingly, the manufacturing history may be easily traced even in a process following the winder 150 based on the identification information about the electrode assembly EA.

Meanwhile, the process controller 172 and/or the identification information management server 160 may store and/or process the identification information about the electrode assembly EA in relation to the process event data of each electrode.

According to one exemplary embodiment, the system 100 may further include the roll map PLC 171.

The roll map PLC 171 may be configured to collect position data data CD of the electrode sheets ESP and ESN based on the input amount signals UWASN and UWASP and the consumption amount signals WASN and WASP of the electrode sheets ESN and ESP.

As one example, the roll map PLC 171 may determine moving distances of the electrode sheets ESN and ESP based on the input amount signals UWASN and UWASP of the electrode sheets ESN and ESP. Accordingly, the roll map PLC 171 may be configured to determine positions of the portions of the electrode sheets ESN and ESP that are unwound by the unwinders UWN and UWP within the electrode sheets ESN and ESP at each point in time when an event occurs in the electrode sheets ESN and ESP. The event may include inspection of the electrode sheet by the inspection and/or measurement device, detection of a reference point marked on the electrode sheet, detection of an NG tag, completion of the electrode assembly EA, and disposal of an electrode or electrode assembly EA containing a defect.

As another example, the roll map PLC 171 may determine the moving distances of the electrode sheets ESN and ESP based on the consumption amount signals WASN and WASP of the electrode sheets ESN and ESP. Accordingly, the roll map PLC 171 may be configured to determine positions of the portions of the electrode sheets ESN and ESP that are wound by the winders 150 within the electrode sheets ESN and ESP at each point in time when an event occurs in the electrode sheets ESN and ESP. As another example, the roll map PLC 171 may determine the moving distances of the electrode sheets based on each of the consumed amount signals and the input amount signals.

Position data may include coordinate values each representing a specific portion of the electrode sheets ESP and ESN, in particular, with respect to the longitudinal direction of the respective electrode sheet ESP, ESN. That is, each of arbitrary points on the electrode sheets ESP and ESN may match one coordinate value, respectively. The coordinate value may be a one-dimensional quantity identifying a position on the respective electrode sheet in the longitudinal or moving direction of the electrode sheets ESP and ESN but is not limited thereto. The coordinate value may also be a two-dimensional quantity identifying a position on the respective electrode sheet in the longitudinal or moving direction and in a transverse direction of the electrode sheets ESP and ESN which extends transverse to the longitudinal direction.

In order to inspect the first electrode sheet and the second electrode sheet, at least one first electrode inspection and/or measurement device may be provided between the first electrode roll and the winder, and at least one second electrode inspection and/or measurement device is provided between the second electrode roll and the winder.

For convenience of description, only one inspection and/or measurement device 130 is shown in FIG. 2, but the inspection and/or measurement device may be provided for each electrode sheet. According to exemplary embodiments, the inspection and/or measurement device 130 may be a vision inspection device. Each inspection and/or measurement device 130 may include a sensing unit 130A and a processing unit 130B. The sensing unit 130A and the processing unit 130B may be connected by wire or wirelessly.

The sensing unit 130A may include an imaging device such as a time delay and integration (TDI) camera, a complementary metal oxide semiconductor (CMOS) image sensor, or the like. The sensing unit 130A may be configured to generate an inspection signal IS indicating a surface of the first electrode sheet ESN or a measurement signal MS measuring the size, width, or the like. The sensing unit 130A may be configured to transmit the inspection signal IS or the measurement signal MS to the processing unit 130B. The inspection signal IS may include, for example, an image of surfaces of the electrode sheets ESP and ESN.

The processing unit 130B may be configured to determine a defect indicator value indicating presence or absence of a defect in the electrode sheets ESP and ESN based on the inspection signal IS and/or the measurement signal MS. The processing unit 130B may be configured to generate the defect indicator value of the electrode sheets ESP and ESN by processing the inspection signal IS and/or the measurement signal MS based on a set algorithm.

The processing unit 130B may be configured to collect the inspection and/or measurement data IMD related to the coordinate values based on the inspection signal IS and/or measurement signal MS and the position data CD. The processing unit 130B may be configured to collect the inspection and/or measurement data IMD related to the coordinate value(s) by matching the defect indicator value determined based on the inspection signal IS and/or the measurement signal MS to the coordinate value of the postion data CD. The processing unit 130B may be configured to transmit the inspection and/or measurement data IMD to the roll map PLC 171.

To match the defect indicator value to the coordinate value of the position data CD, the processing unit 130B may be configured to correct the coordinate value of the position data CD.

For example, a single coordinate value indicating the position of a defect may be matched to the defect indicator value of the inspection and/or measurement data IMD, or a start coordinate value indicating the start of the defect and an end coordinate indicating the end thereof may also be matched to the defect indicator value.

The roll map PLC 171 may be configured to transmit the inspection and/or measurement data IMD to the process controller 172.

The process controller 172 may be configured to transmit the inspection and/or measurement data IMD to the server 180 via an intermediate server, such as an EIF. The server 180 may be configured to generate each of roll maps of the first electrode roll and the second electrode roll provided to the winding process based on the inspection and/or measurement data IMD and additional process event data.

Meanwhile, when the roll map PLC 171 is also equipped with an additional server of appropriate capacity, the roll map PLC 171 itself may be configured to generate roll maps of the first electrode roll and the second electrode roll.

In this sense, the roll map PLC 171 or the server 180, or the assembly of the roll map PLC and the server 180 (see the dotted box in FIG. 2) may be the roll map creation server.

The roll map creation server may create a first electrode roll map that is a visual imitation of an electrode in which a first coordinate value indicating the position of the first electrode sheet moving from the first electrode roll to the winder and process event data acquired according to the movement of the first electrode sheet are represented in relation, and a second electrode roll map that is a visual imitation of an electrode in which a second coordinate value indicating the position of the second electrode sheet moving from the second electrode roll to the winder and process event data acquired according to the movement of the second electrode sheet are represented in relation.

As described above, the roll map PLC 171 or the server 180 connected thereto may acquire the coordinate value of each electrode sheet where an event occurs and inspection and/or measurement data related to each process matched thereto.

In addition, equipment data acquired from process equipment from the first and second electrode rolls to the winder and time series data acquired from each process may be acquired through the process controller 172. The process controller may transmit the equipment data and time series data to the server 180. The equipment data, generally, may be acquired from process equipment physically interacting with the first and second electrode sheets. The equipment data may include process parameters of the respective process such as, for example, a temperature, an output, a current or voltage supplied to the respective equipment and so on.

The process event data may be matched to the coordinate values (the first coordinate value and the second coordinate value) of each electrode sheet, and the coordinate values and the process event data may be displayed in relation in the roll map of the first electrode and the roll map of the second electrode.

In this way, even in the winding process from the electrode rolls to the winder, roll maps may be created for the first electrode sheet and the second electrode sheet, respectively. By comparing first electrode roll map information (coordinate values and process event data) and second electrode roll map information (coordinate values and process event data) of the winding process with roll map information (coordinate values and process event data) of each sub-process before the winding process, a manufacturing history, changes in electrode length, and quality changes between the electrode process and the winding process may be identified.

The identification information assigning device may be connected to the roll map creation server. That is, the identification information assigning device such as the process controller 172 and/or the identification information management server 160 may be connected to the roll map PLC 171 via the process controller 172. Alternatively, the identification information assigning device may be directly connected to the server 180. Accordingly, the identification information assigning device may store and/or process the identification information about the electrode assembly EA in relation to process event data that occurs when the first and second electrode sheets are moved. In particular, the identification information assigning device may relate the identification information about the electrode assembly EA to at least one of first and second coordinate values and process event data included in the first and second electrode roll maps, based on information from the roll map creation server. The first and second coordinate values, which are the roll map coordinate values, may include a start coordinate value and an end coordinate value of the first (winding) length L 1, and a start coordinate value and an end coordinate value of the second (winding) length L2.

Accordingly, the electronic control system, i.e., the identification information assigning device thereof, particularly the identification information management server 160, may manage the identification information about the electrode assembly EA in relation to one or more of the following.
1) Lot identification information about the first electrode sheet and lot identification information about the second electrode sheet,
2) A cut count value of the first electrode sheet and a cut count value of the second electrode sheet,
3) Position data, e.g., in the form of coordinate value(s) of the first electrode sheet corresponding to the first winding length and a position data, e.g., in the form of coordinate value(s) of the second electrode sheet corresponding to the second winding length,
4) Data on defects of the first electrode sheet and the second electrode sheet,
5) Data on defects of the electrode assembly,
6) Tray identification information identifying a tray on which the electrode assembly is loaded,
7) Data on a loading position of the electrode assembly in the tray, and
8) Can identification information identifying an electrode can in which the electrode assembly is accommodated

The lot identification information in 1) may be acquired, for example, when each electrode roll is loaded on a corresponding unwinder, and thus may be related to the identification information about the electrode assembly EA.

As described above, since the identification information about the electrode assembly EA is assigned based on the cut count values of the first and second electrode sheets and/or the position data corresponding to the respective (winding) lengths of the first and second electrode cut portions, the identification information about the electrode assembly may be naturally related to the count values in 2) and the position coordinate values in 3).

In addition, defects may be determined using inspection and/or measurement data IMD acquired by the inspection and/or measurement device 130, and the defect indicator values may also be acquired by the identification information management server 160 through the roll map PLC 171. Depending on the type of inspection and/or measurement device 130, the type of defect may be identified. Therefore, data regarding defects of the first electrode sheet and the second electrode sheet may be related to the identification information about the electrode assembly EA.

The electrode assembly EA may be inspected by a predetermined inspection device 135 after completion, and the identification information about the defective electrode assembly EA may be reported to the identification information management server 160. Accordingly, the identification information about the electrode assembly EA may be related to or associated with data regarding defects of the electrode assembly.

As illustrated in FIG. 2, the electrode assembly EA to which identification information (ID) is assigned may be loaded at a specific loading position on the tray T with a predetermined ID. The tray identification information and the data regarding the loading position may also be related to or associated with the identification information about the electrode assembly EA.

The electrode assembly EA loaded on the tray T may be accommodated in a cylindrical can or a square can, and each can may have can identification information such as a can ID. Accordingly, the ID of the electrode assembly EA and the ID of the can may be related or associated with each other.

FIG. 4 illustrates an example in which several pieces of data are related through the identification information (jelly roll virtual ID) about the electrode assembly EA.

Lot IDs of a positive electrode and a negative electrode are related to a virtual ID of the electrode assembly EA. In addition, cut count values of the positive electrode and the negative electrode included in the corresponding electrode assembly are related to the virtual ID. In addition, start and end coordinate values for a negative electrode portion of the first (winding) length L1 and start and end coordinate values for a positive electrode portion of the second (winding) length L2 (roll map coordinate values), which correspond to the cut count values, are related.

Furthermore, a defect classification mark for the corresponding electrode portion, a tray ID, and even a loading position on the tray may be related as exemplarily shown in FIG. 4.

In this way, according to the present invention, unique identification information may be assigned to each electrode assembly EA manufactured, and the identification information may be related to cut count values, position data, e.g., in the form of coordinate values, and roll map information (roll map coordinates, process event data) in the winding process. In addition, the process event data matched to the cut count value and the position data may be additionally related to the identification information about the electrode assembly.

Therefore, according to the present invention, it can be seen that it is possible to easily trace quality within the winding process as well as between the winding process and processes before and after the winding process.

Referring to FIGS. 1 and 2, the components of the electronic control system, i.e., the process controller 172, the processing unit 130B, the roll map PLC 171, the identification information management server 160, and the server 180, may be implemented as hardware, firmware, software, and a combination thereof. For example, the components may include a computing device such as a workstation computer, a desktop computer, a laptop computer, a tablet computer, or the like. The components may include any one of a simple controller, a microprocessor, a complex processor such as a CPU, GPU, or the like, a processor configured by software, dedicated hardware, and firmware. The components may be implemented, for example, by a general-purpose computer or application-specific hardware such as a digital signal processor (DSP), a field programmable gate array (FPGA), an application specific integrated circuit (ASIC), and the like.

The server 180 may include a physical server or a cloud server. The server 180 may provide data and analysis results to the operator through various frameworks. The framework may include protocols supporting data transmission so that the display device 190 (see FIG. 1) is able to visualize data through a user interface and provide updated visualizations as new data is computed by the server 180. Protocols supporting the data transmission may use HTML, JavaScript, and/or JSON.

The server 180 may transmit a visualization command (VC) to the display device 190, and the display device may visualize the roll map and display the visualized roll map.

The server 180 may include various application programming interfaces (APIs) for storing data in databases and other data management tools. The API may also be used for retrieval of data in databases of various data management systems. The data management system can provide access to a database, pull data from the database, retrieve data, and generate metrics. Here, metrics are tools for visualizing data. The metrics may contain measurement values generated in time series and may be used for monitoring applications and creating state alerts.

According to some embodiments, the operations of the components may be implemented as instructions stored on a machine-readable medium, capable of being read and executed by one or more processors. Here, the machine-readable medium may include any mechanism for storing and/or transmitting information in a form readable by a machine (e.g., a computing device). For example, the machine-readable medium may include a read-only memory (ROM), a random-access memory (RAM), a magnetic disk storage medium, an optical storage medium, a flash memory, electrical, optical, acoustic, or other forms of radio signals (e.g., carrier waves, infrared signals, digital signals, or the like) and other arbitrary signals.

The components may include firmware, software, routines, and instructions to perform the above-described operations. For example, the process controller 172, the processing unit 130B, the roll map PLC 171, the identification information management server 160, and the server 180 may be instantiated in a memory.

FIG. 5 shows a further system 200 for manufacturing an electrode assembly for a battery.

As in the system 100 described above, the system 200 of FIG. 5 includes unwinders UWN, UWP, UWS1, and UWS2, position measurement devices 111N, 111P, 112N, and 112P, a first notching device 120N, a second notching device 120P, various inspection and/or measurement devices, a first cutter 140N, a second cutter 140P, a winder 150 as an example of a combinator, and an electronic control system including an identification information management server 160.

In addition, the processes of inspecting an electrode assembly wound in the winder 150, discharging a defective electrode assembly, and loading the electrode assembly onto a tray are the same as in the system describe by reference to FIG. 2.

In the following, the description of the parts overlapping with the system of FIG. 2 will be omitted, and the description will focus on the differences.

In FIG. 5, it is shown that a first electrode sheet ESP, a second electrode sheet ESN, and separator sheets SS1 and SS2 move toward the cutters and winder by their respective guide rolls G.

In the example of FIG. 5, the sheets are arranged in the order of the separator sheet SS1, the first electrode sheet ESN, the separator sheet SS2, and the second electrode sheet ESP from above. In that the separator sheet SS2 is interposed between the first electrode sheet ESN and the second electrode sheet ESP, the arrangement of the sheets is slightly different from what is shown in FIG. 2, where the separator sheet SS1 is interposed between the first electrode sheet ESN and the second electrode sheet ESP.

In the present example, the roll map PLC 171 and the process controller 172 of the first embodiment are configured as one integrated controller 170.

The integrated controller 170 may be configured to perform the functions of the roll map PLC 171 and the process controller 172 in FIG. 2. Accordingly, the integrated PLC 170 may be configured to generate position data CD based on one of the input amount signals UWASN and UWASP and the consumption amount signals WASN and WASP and acquire the position data CD and inspection and/or measurement data IMD and transmit the acquired data to the server 180. The integrated controller 170 may be configured to generate signals to control the unwinders UWN, UWP, UWS1, and UWS2, the notching devices 120N and 120P, the cutters 140N and 140P, and the winder 150.

In addition, the integrated controller 170 may be connected to the identification information management server 160 and provide the identification information management server 160 with information (position data and cut count values) that is the basis for assigning identification information about the electrode assembly. In addition, the integrated controller 170 may associate the identification information about the electrode assembly with the position data, e.g., in the form of coordinate values, or process event data. Alternatively, the integrated controller 170 may provide the position data and/or process event data to the identification information management server 160 so that the identification information management server 160 may perform the related task.

Further, in the present example, the inspection and/or measurement devices are specifically shown between the electrode rolls and the winder 150.

For example, between the electrode rolls and the notching devices, a reference point measurement device 131N and a seam sensor 132N for the first electrode sheet ESN and a reference point measurement device 131P and a seam sensor 132P for the second electrode sheet ESP are installed. There is a risk that the reference point marked on the uncoated portion of the electrode sheet is removed during subsequent notching by the notching device. Accordingly, reference point measurement devices may be installed before the notching devices to measure reference points on the electrode sheets in advance. The reference point measurement devices 131N and 131P may measure reference point positions of the respective electrode sheets and compare the reference points with the reference point positions in respective leading sub-processes. In addition, the seam sensors 132N and 132P may detect seams, that is, connecting tapes, of the respective electrode sheets. Positions of the connecting tapes detected by the seam sensors may also be compared with positions of the connecting tapes of the electrode sheets in the respective leading sub-processes. The reference points and connecting tapes of each electrode sheet before and after the winding process are compared and based on changes in the positions of the reference points and connecting tapes identified as a result of the comparison, changes in the lengths of the electrode sheets, broken positions, and the like may be identified. When the first electrode roll map for the first electrode sheet and the second electrode roll map for the second electrode sheet are created in the winding process based on the identification, coordinates of the reference points and seam positions on the corresponding electrode roll maps may be corrected.

After the notching devices 120N and 120P, predetermined inspection and/or measurement devices may be installed at preset positions. For example, appearance inspection devices 133N and 133P may be installed for the respective electrode sheets. Alternatively, a dimension/width inspection device may also be installed. Second seam sensors 134N and 134P may be installed at positions just before the electrode sheet and the separator are joined to finally detect the positions of seams provided on the electrode sheets.

The multiple inspection and/or measurement devices may be connected to the roll map PLC 171 as shown in FIG. 2 or the integrated controller 170 in FIG. 3 to transmit inspection and/or measurement data (IMD) acquired from the inspection and/or measurement devices. In addition, each inspection and/or measurement device may include the sensing unit and the processing unit, respectively, as described above.

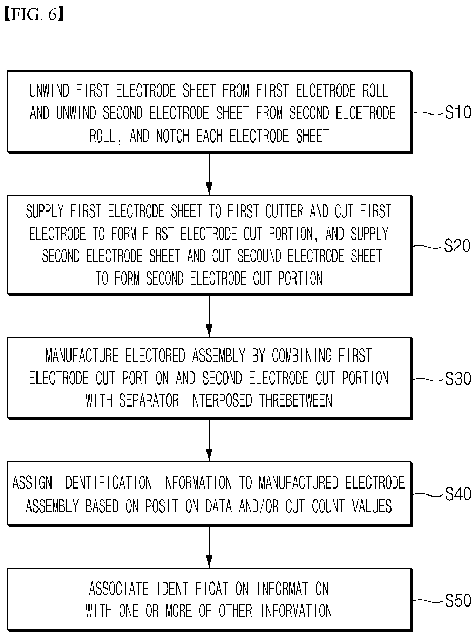

FIG. 6 is a flowchart for describing a battery manufacturing method according to an exemplary embodiment.

Referring to FIGS. 2, 3, and 6, the first electrode sheet ESN and the second electrode sheet ESP are unwound from the first electrode roll ERN and the second electrode roll ERP, respectively, and moved toward the winder 150. In addition, the separator sheet is also unwound from a separator roll corresponding to each electrode roll and moved toward the winder 150. The unwound first electrode sheet ESN is notched at a predetermined portion within the first winding length L1 by the first notching device 120N so that an electrode tab is formed. Further, the unwound second electrode sheet ESP is notched at a predetermined portion within the second winding length L2 by the second notching device 120P so that an electrode tab is formed.

The process controller 172 may control movement the electrode sheet and the separator sheet by operating the unwinder corresponding to each electrode roll and separator roll. The process controller 172 may also control notching of each electrode sheet by controlling each notching device 120N or 120P to correspond to the moving speed of the electrode sheet (operation S10).

The first electrode sheet ESN and the second electrode sheet ESP moving to the winder 150 may be inspected and measured by a predetermined inspection and/or measurement device before and/or after the notching. Inspection and/or measurement data IMD related to coordinate values acquired by the inspection and/or measurement device may be transmitted to the server 180 through the roll map PLC 171 and the process controller 172. Alternatively, the inspection and/or measurement data IMD may be transmitted to the server 180 through the integrated controller 170.

The roll map PLC 171 or the server 180 may create a first electrode roll map imitating the first electrode sheet ESN and a second electrode roll map imitating the second electrode sheet ESP based on the coordinate values and inspection and/or measurement data. In the first electrode roll map, a first coordinate value indicating the position of the first electrode sheet may be displayed in relation to process event data. In the second electrode roll map, a second coordinate value indicating the position of the second electrode sheet may be displayed in relation to the process event data. The roll map data may be related to identification information assigned to an electrode assembly EA, which will be described below.

Each electrode sheet that is inspected and/or measured may be moved by a corresponding guide roll to join the separator sheet. Generally, the first electrode sheet ESN is supplied to the first cutter 140N and cut by the first (winding) length L1 by operating the first cutter 140N so that a first electrode cut portion having the first length L1 is formed, and the second electrode sheet ESP is supplied to the second cutter 140P and cut by the second (winding) length L2 by operating the second cutter 140P so that a second electrode cut portion having the second length L2 is formed (operation S20).

Further, the method includes acquiring first position data reflecting positions on the first electrode sheet supplied to the first cutter and/ or generating a first cut count value each time the first length of the first electrode sheet is supplied to the first cutter, and acquiring second position data reflecting positions on the second electrode sheet supplied to the second cutter, and/or generating a second cut count value each time the second length of the second electrode sheet is supplied to the second cutter. Acquiring the first and second cut count values and/or the first and second position data may be part of operation S20 and/or of operation S10.

The first electrode cut portion and the second electrode cut portion are wound in the winder 150 with a separator interposed therebetween to complete a jelly roll-shaped electrode assembly EA (operation S30). Generally, operation S30 includes manufacturing an electrode assembly by combining the first electrode cut portion and the second electrode cut portion with a separator interposed therebetween. The winder 150 or, generally, the combinator may be equipped with a separate cutter for cutting the separator sheet. In this case, the first electrode cut portion and the second electrode cut portion may be manufactured into the electrode assembly by being wound together with a separator of the third winding length L3.

For the completed electrode assembly EA, the predetermined identification number assigning device may assign identification information to the electrode assembly EA based on at least one of the following i) and ii) (operation S40).
i) a cut count value of the first electrode sheet and a cut count value of the second electrode sheet, and
ii) the first position data of the first electrode sheet corresponding to the first winding length and the second position data of the second electrode sheet corresponding to the second winding length.

The cut count values may be acquired by a cut counter provided in the cutters, or the like, and the cut count values may be transmitted to the process controller 172 or the identification information management server 160, as described above.

The first and second position data, e.g., in the form of position coordinate values of the first and second electrode sheets may be acquired by the roll map PLC 171 or the integrated controller 170 based on position signals (encoder values) of the position measurement devices 111N, 111P and/or 112N, 112P. The acquired position coordinate values may be transmitted to the process controller 172 or the identification information management server 160. The electronic control system, by carrying out the function of an identification information assigning device, e.g., through the process controller 172, the identification information management server 160, or a combination thereof, may assign, for example, virtual identification information (ID) to the completed electrode assembly EA based on the cut count values and/or position coordinate values (operation S40).

The identification information about the electrode assembly EA may be related to or associated with one or more of the following by the identification information assigning device (the process controller 172, the identification information management server 160, or the combination thereof) or the roll map creation server (the roll map PLC 171, the server 180, or the combination thereof) (operation S50).
1) Lot identification information about the first electrode sheet and lot identification information about the second electrode sheet,
2) A cut count value of the first electrode sheet and a cut count value of the second electrode sheet,
3) First position data of the first electrode sheet corresponding to the first winding length and second position data of the second electrode sheet corresponding to the second winding length,
4) Data on defects of the first electrode sheet and the second electrode sheet,
5) Data on defects of the electrode assembly,
6) Tray identification information identifying a tray on which the electrode assembly is loaded,
7) Data on a loading position of the electrode assembly in the tray, and
8) Can identification information identifying an electrode can in which the electrode assembly is accommodated

Generally, the identification information is associated with the first cut count value and/or the first position data corresponding to the first electrode cut portion, and with the second cut count value and/or the second position data corresponding to the second electrode cut portion. This step may form part of operation S40 or S50.

In this case, the first position data of the first electrode sheet ESN may include at least one of a start coordinate value and an end coordinate value of the first electrode cut portion having the first (winding) length, and the second position data of the second electrode sheet ESP may include at least one of a start coordinate value and an end coordinate value of the second electrode cut portion having the second (winding) length. Generally, the first position data may include first coordinate values reflecting the positions on the first electrode sheet corresponding to the first electrode cut portion. The first coordinate values may include at least a start coordinate value corresponding to one end of the first electrode cut portion, and an end coordinate value of the first electrode cut portion corresponding to an opposite end of the first electrode cut portion. Similar, the second position data may include second coordinate values reflecting the positions on the second electrode sheet corresponding to the second electrode cut portion, and the second coordinate values may optionally include at least a start coordinate value corresponding to one end of the second electrode cut portion, and an end coordinate value of the second electrode cut portion corresponding to an opposite end of the second electrode cut portion.

In addition, the first and second coordinate values of the first and second electrode sheets may be roll map coordinate values included in a first electrode roll map that is a visual imitation of the first electrode sheet moving from the first electrode roll to the winder, and the second electrode roll map that is a visual imitation of the second electrode sheet moving from the second electrode roll to the winder.

In addition, the identification information about the electrode assembly EA may be further related to process event data acquired when the first electrode sheet moves from the first electrode roll to the winder and when the second electrode sheet moves from the second electrode roll to the winder.

The process event data may include at least one of equipment data acquired from process equipment physically interacting with the first and second sheets, inspection and/or measurement data acquired from the first and second electrode sheets, and/or time series data acquired in each process.

According to the method of the present invention, quality tracing of electrodes and electrode assemblies containing the electrodes may be performed within the winding process as well as between the winding process and processes before and after the winding process through the identification information about the electrode assembly. Accordingly, the manufacturing reliability of workpieces, intermediate products, and products may be improved throughout the entire battery manufacturing process.

Above, the present invention has been described in more detail through drawings and embodiments. However, configurations shown in the drawings and embodiments are merely one embodiment of the present invention, and, not intended to fully describe the technical aspects of the present invention.

## Claims

1. A method for manufacturing an electrode assembly for a battery, comprising:
i) supplying a first electrode sheet to a first cutter;
ii) cutting, by operating the first cutter, the first electrode sheet to form a first electrode cut portion having a first length;
iii) acquiring first position data reflecting positions on the first electrode sheet supplied to the first cutter, and/or generating a first cut count value each time the first length of the first electrode sheet is supplied to the first cutter;
iv) supplying a second electrode sheet to a second cutter;
v) cutting, by operating the second cutter, the second electrode sheet to form a second electrode cut portion having a second length;
vi) acquiring second position data reflecting positions on the second electrode sheet supplied to the second cutter, and/or generating a second cut count value each time the second length of the second electrode sheet is supplied to the second cutter;
vii) manufacturing an electrode assembly by combining the first electrode cut portion and the second electrode cut portion with a separator interposed therebetween;
viii) assigning identification information to the manufactured electrode assembly,
wherein the identification information is associated with the first cut count value and/or the first position data corresponding to the first electrode cut portion, and with the second cut count value and/or the second position data corresponding to the second electrode cut portion.

2. The method of claim 1, further comprising:
notching the first and second electrode sheets to form electrode tabs on the first electrode sheet and the second electrode sheet, respectively, before cutting the first and the second electrode sheets;
wherein the first cutter is operated such that a respective electrode tab formed in the first electrode sheet is located completely within the first electrode cut portion, and
the second cutter is operated such that a respective electrode tab formed in the second electrode sheet is located completely within the second electrode cut portion.

3. The method of claim 1 or 2, wherein the first electrode cut portion and the second electrode cut portion are combined with a separator of a third length.

4. The method of any one of claims 1 to 3, wherein the identification information assigned to the electrode assembly is further associated with one or more of the following:
lot identification information of the first electrode sheet and lot identification information of the second electrode sheet,
data on defects of the first electrode sheet and the second electrode sheet,
data on defects of the electrode assembly,
tray identification information identifying a tray on which the electrode assembly is loaded,
data on a loading position of the electrode assembly in the tray, and
can identification information identifying an electrode can in which the electrode assembly is accommodated.

5. The method of any one of claims 1 to 4, wherein
acquiring the first position data includes acquiring first coordinate values reflecting the positions on the first electrode sheet corresponding to the first electrode cut portion, and
acquiring the second position data includes acquiring second coordinate values reflecting the positions on the second electrode sheet corresponding to the second electrode cut portion.

6. The method of claim 5, wherein
the first coordinate values include at least a start coordinate value corresponding to one end of the first electrode cut portion, and an end coordinate value of the first electrode cut portion corresponding to an opposite end of the first electrode cut portion, and
the second coordinate values include at least a start coordinate value corresponding to one end of the second electrode cut portion, and an end coordinate value of the second electrode cut portion corresponding to an opposite end of the second electrode cut portion.

7. The method of any one of the preceding claims, further comprising:
generating a first roll map including a visual representation of the first electrode sheet having been supplied to the first cutter and processed to form the electrode assembly, the first roll map reflecting process event data acquired from the first electrode sheet associated with the first position data; and
generating a second roll map including a visual representation of the second electrode sheet having been supplied to the second cutter and processed to form the electrode assembly, the second roll map reflecting process event data acquired from the second electrode sheet associated with the second position data.

8. The method of claim 7, wherein the identification information assigned to the electrode assembly is further associated with the process event data via the first and the second position data.

9. The method of claim 7 or 8, further comprising:
acquiring the process event data, optionally as time series data, respectively while the first electrode sheet is supplied to the first cutter and while the second electrode sheet is supplied to the second cutter.

10. The method of any one of claims 7 to 9, wherein the process event data includes at least one of:
equipment data acquired from process equipment physically interacting with the first and second electrode sheets;
inspection and/or measurement data acquired from the first and second electrode sheets.

11. The method of any one of the preceding claims, wherein:
generating the first cut count value includes detecting a length of the first electrode sheet supplied to the first cutter, and increasing the first cut count value each time the first length of the first electrode sheet is supplied to the first cutter; and
generating the second cut count value includes detecting a length of the second electrode sheet supplied to the second cutter, and increasing the second cut count value each time the second length of the second electrode sheet is supplied to the second cutter.

12. A system for manufacturing an electrode assembly for a battery, comprising:
a first cutter configured to cut a first electrode sheet supplied to the first cutter to form a first electrode cut portion having a first length;
a first position detecting means configured to acquire first position data reflecting positions on the first electrode sheet supplied to the first cutter;
a second cutter configured to cut a second electrode sheet supplied to the second cutter to form a second electrode cut portion having a second length;
a second position detecting means configured to acquire second position data reflecting positions on the second electrode sheet supplied to the second cutter;
a combinator configured to manufacture an electrode assembly by combining the first electrode cut portion and the second electrode cut portion with a separator interposed therebetween; and
an electronic control system in signal communication with the first cutter, the second cutter, the first position detecting means, and the second position detecting means,
wherein the electronic control system is configured to, in accordance with the method according to any one of the preceding claims,
- operate the first and the second cutter,
- generate the first and the second cut count value, and
- assign the identification information to the manufactured electrode assembly, wherein the identification information is associated with the first cut count value and/or the first position data, and with the second cut count value and/or the second position data.

13. The system of claim 12, wherein the combinator is a winder configured to wind the first electrode cut portion and the second electrode cut portion with the separator therebetween to manufacture the electrode assembly.

14. The system of claim 12 or 13, wherein the system further comprises a first electrode roll configured to unwind the first electrode sheet for supplying it to the first cutter, and a second electrode roll configured to unwind the second electrode sheet for supplying it to the second cutter.

15. The system of any one of claims 12 to 14, wherein:
the first position detecting means includes a first position measurement device configured to generate a first position signal of the first electrode sheet supplied to the first cutter, and a first control unit forming part of the electronic control system and being configured to acquire, based on the first position signals, the first position data;
the second position detecting means includes a second position measurement device configured to generate a second position signal of the second electrode sheet supplied to the second cutter, and a second control unit forming part of the electronic control system and being configured to acquire, based on the second position signals, the second position data; and
the first and the second control unit are preferably integrated in one single controller, preferably in a process programmable logic controller.

16. The system of claim 15, wherein the first position measurement device is configured to detect a length of the first electrode sheet supplied to the first cutter, and the second position measurement device is configured to detect a length of the second electrode sheet supplied to the second cutter, and
wherein the electronic control system comprises:
a first cut counter configured to increase a first cut count value each time the first length of the first electrode sheet is supplied to and cut by the first cutter, and
a second cut counter configured to increase a second cut count value each time the second length of the second electrode sheet is supplied to and cut by the second cutter.

17. The system of any one of claims 12 to 16, wherein
the electronic control system includes a process controller configured to control supply of the electrode sheets to the cutters and/or to control operation of the cutters, and a server data-communicably connected to the process controller, and
the process controller, the sever or a combination of the process controller and the server form an identification information assigning device configured to: associate the identification information with the first cut count value and/or the first position data, and with the second cut count value and/or the second position data; and assign the identification information to the manufactured electrode assembly.

18. The system of any one of claims 12 to 17, insofar as claim 12 refers to claim 7, wherein the electronic control system includes a roll map creation server configured to generate the first roll map and the second roll map.
